**Europäisches Patentamt**

**European Patent Office**

**Office européen des brevets**

(19)

(11) Veröffentlichungsnummer: **0 135 056 B1**

(12) **EUROPÄISCHE PATENTSCHRIFT**

(45) Veröffentlichungstag der Patentschrift:
**01.04.87**

(21) Anmeldenummer: **84108689.5**

(22) Anmeldetag: **23.07.84**

(51) Int. Cl.⁴: **H 01 M 10/44,** H 01 M 10/36,
H 02 J 7/04

(54) **Anordnung zum Betrieb eines elektrochemischen Speichers.**

(30) Priorität: **25.07.83 DE 3326729**

(43) Veröffentlichungstag der Anmeldung:
**27.03.85 Patentblatt 85/13**

(45) Bekanntmachung des Hinweises auf die Patenterteilung:
**01.04.87 Patentblatt 87/14**

(84) Benannte Vertragsstaaten:
**AT CH DE FR GB IT LI SE**

(56) Entgegenhaltungen:
**EP - A - 0 013 005
DE - A - 2 928 503
US - A - 3 454 859
US - A - 3 997 830
US - A - 4 287 267**

**PATENTS ABSTRACTS OF JAPAN, Band 5, Nr.
198(E-87)(870), 16. Dezember 1981;**

(73) Patentinhaber: **Siemens Aktiengesellschaft Berlin und
München, Wittelsbacherplatz 2, D-8000 München 2 (DE)**

(72) Erfinder: **Urstöger, Rupert, Wielandstrasse 4,
D-8525 Uttenreuth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anordnung zum Betrieb eines elektrochemischen Speichers, insbesondere Zink-Brom- oder Zink-Chlor-Speichers, bei dem die aktive Masse während des Entladevorganges in Lösung geht und während des Ladevorganges wieder auf der Elektrode abgeschieden wird und bei dem Gruppen von Zellen in Reihe auf einen Verbraucher geschaltet sind und eine Einrichtung zum Abbau ungleichmässig verteilter Abscheidungen an den Elektroden durch vollständiges Entladen von Zellen über einen Widerstand und eine Vorrichtung zum Wiederladen der Zellen vorgesehen sind.

Aus Newsweek 26.06.1980, Seite 75 ist die Anwendung eines Zinkchlorid-Speichers für ein Elektroauto bekannt geworden.

In der US-A-4 287 267 ist ein Verfahren zum Umleiten des elektrischen Stromes um eine fehlerhafte Zellengruppe einer Zink-Chlor-Speicheranlage beschrieben, die aus einer Vielzahl von parallelgeschalteten Speichern besteht. Durch Überbrücken mittels eines Schalters wird die fehlerhafte Zellengruppe ausser Funktion gesetzt und nicht weiter entladen, wobei die Stromversorgung für den Elektrolyt-Pumpenmotor, den Gas-Pumpenmotor und das Chlorgas-Speiseventil abgeschaltet wird. Dadurch kann die Betriebssicherheit und Verfügbarkeit eines Zink-Chlor-Speichers erhöht werden.

Derartige elektrochemische Speicher zeichnen sich durch eine hohe Energiedichte und hohe Leistungsdichte aus. In der Praxis lässt sich jedoch keine ausreichende Ladezyklenzahl erreichen. Ein Grund ist in den durch die bipolare Elektrodenanordnung bedingten Leck- oder parasitären Strömen zu sehen, die infolge der zu den einzelnen Zellen parallelen, über eine gemeinsame Hauptleitung erfolgenden Elektrolytzuführung auftreten und zu Energieverlusten und ungleichmässiger Zinkabscheidung (Dendritenbildung) führen. Dieser Effekt nimmt mit steigender Zahl der zu einer Gruppe zusammengefassten Einzelzellen zu und wirkt sich hinsichtlich der Zinkabscheidung am stärksten bei den Elektrolytzuführungen in der Nähe des negativen Endpols des bipolaren Zellblockes aus. Mit zunehmender Zahl der Lade-Entlade-Vorgänge wird die normale Elektrolytzirkulation gestört, die Zinkabscheidung in den einzelnen Zellen wird uneinheitlich, so dass schliesslich deren voneinander abweichendes Verhalten eine Funktionsuntüchtigkeit des Speichers verursacht. Durch Kristallbildung können ausserdem die Platten und Separatoren beschädigt werden, was die Batterie unbrauchbar macht. Zur Eliminierung der parasitären Ströme ist es bekannt, der Batteriespannung an den Elektrolytleitungen eine etwa gleichgrosse Gegenspannung entgegenzusetzen, welche den Fluss der parasitären Ströme kompensiert. Dadurch wird zwar die Ungleichmässigkeit der Abscheidungen auf den Elektroden vermindert, aber nicht vermieden. Es steigt zwar die erreichbare Anzahl von Lade- und Entlade-Vorgängen bis zur Funktionsuntüchtigkeit und Beschädigungsgefahr infolge des Unsymmetriezustandes in den Abscheidungen, diese Anzahl bleibt aber immer noch für die praktische Anwendung zu niedrig. Ein weiterer Grund für die Entstehung von ungleichmässigen Abscheidungen an den Elektroden ist nämlich in den prinzipiellen Mechanismen solcher Vorgängen zu sehen, wonach an bereits bestehenden Spitzen durch erhöhte elektrische Feldstärke weiterhin verstärkte Abscheidungen auftreten. Dadurch wird eine besondere Behandlung des Speichers erforderlich, die im wesentlichen aus einer zeitaufwendigen vollständigen Entladung des Speichers besteht, durch die die Abscheidungen abgebaut werden. Bei der nachfolgenden Ladung entsteht wieder eine gleichmässige neue Schicht.

Während der vorgenannten Totalentladung steht der Speicher für die Versorgung des Verbrauchers nicht zur Verfügung. Bei Batterien für Fahrzeugantriebe ist damit eine Vorratshaltung gleichartiger Speicher erforderlich oder es entsteht eine Ausfallzeit für das gesamte Fahrzeug.

Anordnungen für ein totales Entladen eines Nickel-Kadmium-Speichers zum Zweck des Regenerierens und des Wiederherstellens eines gleichmässigen Spannungszustandes aller Zellen oder Zellengruppen und um das Absinken des Wirkungsgrades auf einem Minimum zu halten, sind für die Stromversorgung von Satelliten (US-A-3 997 830 und US-A-3 454 859) bekannt.

Bei der aus der US-A-3 997 830 bekannten Ausführung sind zu einem Verbraucher eine Solarbatterie und zwei elektrochemische Speicher parallel geschaltet, deren einzelne Zellen auf je einen Entladewiderstand schaltbar sind. Während der eine Speicher überholt wird und die einzelnen Zellen mittels einer von der Bodenstation aus betätigbaren Fernsteuerung auf die Entladewiderstände geschaltet werden, steht der andere Speicher und die Solarbatterie zur Energieversorgung zur Verfügung. Bei der Entladung wird die Klemmenspannung des Speichers überwacht und abhängig von dem Erreichen einer Mindestspannung oder nach einer vorgegebenen Entladezeit der Speicher wieder aufgeladen, wobei die Aufladung durch eine Ladekontrolleinrichtung überwacht wird.

Aus der US-A-3 454 859 ist ferner eine Anordnung zum vollständigen Entladen der Zellen eines Nickel-Kadmium-Speichers bekannt. Um die Lebensdauer und Verfügbarkeit zu erhöhen, ist eine Überwachung der Spannung des gesamten Speichers und jeder einzelnen Zelle vorgesehen, wobei beim Absinken der Spannung des gesamten Speichers oder einer Zelle unter einen vorgegebenen Wert der gesamte Speicher von einer zur Aufladung dienenden Solarbatterie abgetrennt und dann über einen dem Speicher parallelgeschalteten Transistor entladen wird. Dabei wird die Entladung von der Spannung derjenigen Zelle gesteuert, die die geringste Höhe hat. Erreicht die Spannung dieser Zelle etwa den Wert Null, so wird die Entladung dieser Zelle gesperrt und die weitere Entladung der übrigen Zellen durch jeder Zelle parallelgeschaltete weitere Transistoren vorgenommen. Sind alle Zellen entladen, so wird der Speicher zur Aufladung an die Solarbatterie geschaltet.

Bei diesen bekannten Ausführungen muss während des Entladevorganges des Speichers der Verbraucher auf eine andere Energiequelle geschaltet werden, die durch einen zweiten Speicher oder eine Solarzellenanlage gebildet wird. Ferner sind derartige Anordnungen dort nicht einsetzbar, wo aus Raummangel oder aus Gewichtsgründen ein zweiter Speicher nicht untergebracht werden kann, da in der Zeit für den totalen Entladevorgang der Speicher die Versorgung des Verbrauchers nicht übernehmen kann.

Der Erfindung liegt die Aufgabe zugrunde, die Verfügbarkeit eines Speichers, bei dem die aktive Masse während des Entladevorganges in Lösung geht und während des Ladevorganges wieder auf der Elektrode abgeschieden wird, weiter zu erhöhen und die Anwendung zum Speisen eines Verbrauchers in Anlagen zu ermöglichen, in denen aus Gewichtsgründen oder wegen Raummangel kein zweiter Speicher untergebracht werden kann.

Diese Aufgabe wird erfindungsgemäss dadurch gelöst, dass die Einrichtung zum Abbau ungleichmässig verteilter Abscheidungen mit einer Steuereinrichtung in der Weise versehen ist, dass in zyklischer Folge jeweils nur eine Gruppe von Zellen des Speichers über den Widerstand entladen und diese Gruppe spätestens dann aus dem Verband der übrigen Gruppen herausgeschaltet wird, wenn sie ihre betriebliche Einsatzgrenze erreicht hat, dass sie dann weiter soweit entladen wird, bis Abscheidungen an den Elektroden beseitigt sind und dass sie nach dem Aufladen wieder in den Speicher eingefügt oder in den Speicher eingefügt und dann geladen wird.

Auf diese Weise kann eine ungleichmässige Abscheidung der aktiven Masse an den Elektroden des Speichers ohne Betriebsunterbrechung immer wieder abgebaut werden. Dadurch braucht im Gegensatz zu den bekannten Verfahren auch bei Verwendung nur eines Speichers und nur eines Widerstandes zur Entladung der normale Betrieb des Verbrauchers während der Beseitigung ungleichmässig verteilter Abscheidungen nicht unterbrochen zu werden. Gegenüber dem eingangs genannten Betrieb eines Zink-Chlorid-Speichers in einem Elektroauto können die Wartungsarbeiten erheblich reduziert werden. Bei einer Regenerierung der Zellen in kurzen Zeitabständen können die Elektroden näher aneinandergerückt werden, da man weniger Dendritenhöhe einkalkulieren muss. Dadurch wird der Widerstand des Speichers kleiner, die Verluste werden geringer, so dass man weniger Kühlaufwand benötigt, und der Wirkungsgrad wird verbessert.

In vorteilhafter Weise ist der an die vorzeitig zu entladende Gruppe der Zellen geschaltete Widerstand ein zusätzlicher Verbraucher. Dadurch kann dann, wenn die vorzeitig zu entladende Gruppe der Zellen seine betriebliche Einsatzgrenze erreicht hat, die Restenergie noch betrieblich genutzt werden.

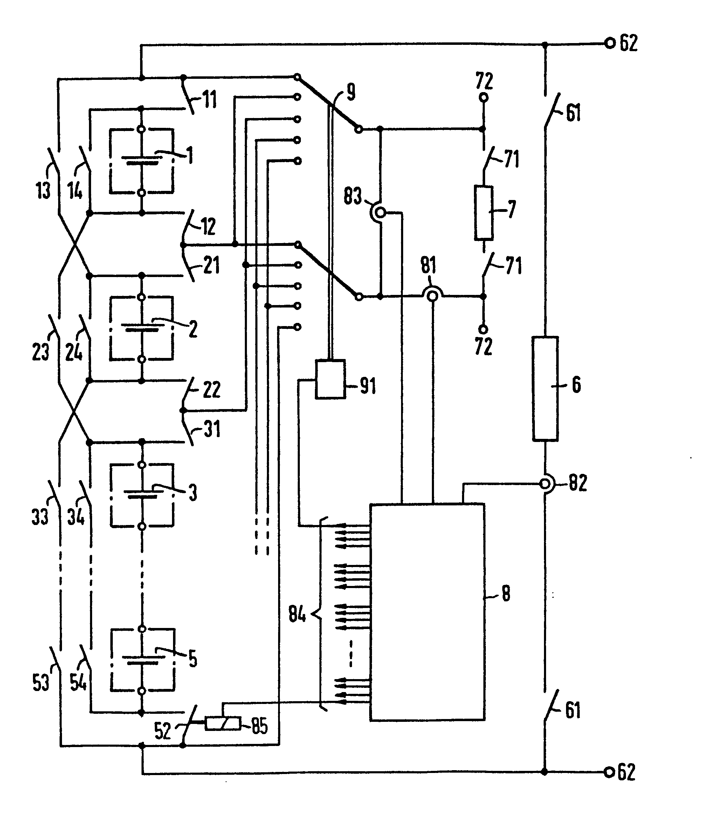

Anhand der Zeichnung wird die Erfindung näher erläutert.

Die Figur zeigt ein elektrisches Schaltbeispiel einer Anlage zum Speisen eines Verbrauchers aus einem elektrochemischen Speicher. Ein aus mehreren Gruppen 1 bis 5 von in Reihe geschalteten Zellen bestehender elektrochemischer Speicher dient zum Speisen eines über Schalter 61 zu- und abschaltbaren Hauptverbrauchers 6. Als Speicher dient z.B. ein Zink-Brom-Speicher, bei dem die aktive Masse während des Entladevorganges in Lösung geht und während des Ladevorganges wieder auf der Elektrode abgeschieden wird.

Jede Gruppe 1 bis 5 der Zellen kann bezüglich des Elektrolytumlaufes unabhängig betrieben werden. Die jeder Gruppe von Zellen zugeordneten Pumpen sowie die Elektrolytzu- und -ableitungen sind in der Zeichnung nicht dargestellt.

Der elektrochemische Speicher wird in der Weise betrieben, dass in zyklischer Folge jeweils eine Gruppe von Zellen vor den übrigen Gruppen von Zellen entladen wird. Hierzu sind in den die Reihenschaltung der Gruppen 1 bis 5 herstellenden Leitungsverbindungen Schaltkontakte 11, 12, 21, 22, 31 . . . 52 angeordnet. Dabei liegen in jeder Zuleitung ein Schaltkontakt und in jeder Leitungsverbindung zwei Schaltkontakte, z.B. in den Zuleitungen der Schaltkontakt 11 bzw. 52 und in der Leitungsverbindung zwischen den Gruppen 1 und 2 die Kontakte 12 und 21. Die Schaltkontakte 11 bis 52 haben ferner die Aufgabe, eine gewünschte Gruppe von Zellen aus dem Verband herauszuschalten und eine Reihenschaltung der übrigen Verbraucher wieder herzustellen. Die Schaltkontakte 13, 23, 33 . . . 53 dienen dazu, bei einer herausgeschalteten Gruppe von Zellen die Reihenschaltung wieder herzustellen.

Zum Kurzschliessen einer herausgestalteten Gruppe von Zellen sind Kontakte 14, 24, 34 . . . 54 vorgesehen.

Ein zusätzlicher Verbraucher 7 kann über einen Wahlschalter 9 mit einer gewünschten Gruppe von vorzeitig zu entladenden Zellen verbunden werden. Dieser Wahlschalter 9 ist zweipolig ausgebildet und mit einem Antrieb 91 versehen.

Zur Steuerung der Schaltvorgänge dient eine Steuereinrichtung 8 mit Ausgängen 84 für die nur einmal dargestellten Antriebe 85 der Schaltkontakte 11 bis 52 und für den Antrieb 91 des Wahlschalters 9. Der Steuereinrichtung 8 sind Messglieder 82, 81 zum Erfassen des Stromes in der Zuleitung zum Hauptverbraucher 6 und des Stromes in der Leitung zum zusätzlichen Verbraucher 7 sowie ein Messglied 83 zum Erfassen der Spannung der an den zusätzlichen Verbraucher 7 geschalteten Gruppe von Zellen zugeordnet.

Bei Speisung eines Verbrauchers, bei dem Spannungsänderungen zulässig sind, wird nach Schliessend der Kontakte 61, 11, 12 . . . 52 der Verbraucher 6 zunächst aus allen in Reihe geschalteten Gruppen 1 bis 5 von Zellen gespeist.

Die Steuereinrichtung 8 besitzt eine an sich bekannte Vorrichtung, die das Entladen zum Beseitigen ungleichmässig verteilter Abscheidungen einer Gruppe von Zellen in Abhängigkeit von einer vorgegebenen Anzahl von betrieblichen Entladungen und/ oder Wiederladungen, z.B. nach 10 Wiederladungen, einleitet. Ferner sind Logikglieder vorgesehen, die den Wahlschalter 9 und die Kontakte 11 bis 52 in der nachstehend beschriebenen Weise steuern. Zunächst wird dann, wenn der Hauptverbraucher 6 auf den Speicher geschaltet ist, der zusätzliche Verbraucher 7 auf eine Gruppe von Zellen geschaltet, so dass diese vor den übrigen Gruppen der Zellen entladen wird, da sie den Hauptverbraucher 6 und den zusätzlichen Verbraucher 7 speist. Im dargestellten Beispiel ist der zusätzliche Verbraucher 7 über den Wahlschalter 9 auf die Gruppe 1 der Zellen geschaltet, die solange in Reihe mit den übrigen Gruppen 2 bis 5 betrieben wird, bis sie ihre betriebliche Einsatzgrenze für den Hauptverbraucher 6 erreicht hat. Das Erreichen dieser Grenze wird mittels der Signale, die von den Messgeräten 81 und 83 an die Steuereinrichtung 8 gegeben werden, ermittelt. Die Gruppe 1 wird dann aus dem Verband der übrigen Gruppen 2 bis 5 herausgeschaltet. Dies geschieht durch Öffnen des Kontaktes 21 und Schliessen des Kontaktes 13. Die weiter auf den zusätzlichen Verbraucher 7 geschaltete Gruppe 1 wird dann soweit entladen, bis ungleichmässig verteilte Abscheidungen an den Elektroden beseitigt sind. Dabei können mit abnehmender Restladung der Batterie Zusatzverbraucher 7 schrittweise weggeschaltet werden. Nach der Entladung über den zusätzlichen Verbraucher 7 wird dieser durch Öffnen der Schaltkontakte 71 abgetrennt und durch Schliessen des Kontaktes 14 gegebenenfalls eine Totalentladung vorgenommen. Um eine weitere Versorgung des zusätzlichen Verbrauchers 7 sicherzustellen, wird dieser nach dem Abschalten von der vorzeitig zu entladenden Gruppe der Zellen 1 in wechselnder Folge auf die übrigen Gruppen der Zellen 2 bis 5 geschaltet. Über die Anschlüsse 72 kann ein Ladegerät auf die Gruppe 1 der Zellen geschaltet werden. Nach Wiederaufladung der Gruppe 1 wird diese durch entsprechende Steuerung der zugehörigen Schaltkontakte über die Steuereinrichtung 8 wieder in den Verband eingefügt. Die zur Steuerung des Entladevorganges dienenden Messglieder 81, 82, 83 können auch zur Steuerung des Ladevorganges mit verwendet werden.

Die Gruppe 1 der Zellen kann nach der Entladung auch in den Verband eingefügt und dann zusammen mit den übrigen Gruppen der Zellen über die Ladeanschlüsse 62 an ein Ladegerät angeschlossen werden.

Dann wird eine andere Gruppe von Zellen, z.B. die Gruppe 2, in analoger Weise automatisch entladen und wieder in den Verband eingefügt. Dabei werden beim Herausschalten der Gruppe 2 die Kontakte 12 und 31 geöffnet. Die Totalentladung wird betriebsmässig bewirkt, bevor erfahrungsgemäss Nachteile durch Dendritenbildung entstehen können.

Nach der Gruppe 2 werden dann alle weiteren Gruppen 3 bis 5 in zyklischer Folge auf den zusätzlichen Verbraucher 6 geschaltet, bis alle Zellengruppen einmal total entladen und Abscheidungen beseitigt worden sind. Ein weiterer Zyklus kann sich unmittelbar anschliessen oder erst nach einer vorgegebenen Zeit eingeleitet werden.

Bei Anwendung des Verfahrens in einem Elektrofahrzeug können beispielsweise die zusätzlichen Verbraucher Kompressor-, Pumpen- und Lüfterantriebe oder Bordstromverbraucher bzw. die Heizung sein. Als Hauptverbraucher dient dann der Fahrantrieb, der nach dem Herausschalten einer Gruppe mit etwas verminderter Spannung weiterbetrieben wird. Dies hat keine nachteiligen Auswirkungen da der Fahrzeugantrieb ohnehin für gewisse Spannungstoleranzen ausgelegt ist.

Für Verbraucher, die mit konstanter Spannung versorgt werden müssen, ist es vorteilhaft, die Steuereinrichtung 8 derart auszulegen, dass in zyklischer Folge jeweils diejenige Gruppe von Zellen aus dem Verband der übrigen Gruppen herausgeschaltet wird, die zur Regenerierung vorzeitig entladen werden soll. In diesem Fall wird der Hauptverbraucher 6 immer nur von einer um die Spannung einer Gruppe verringerten Spannung gespeist. Soll beispielsweise die Gruppe 1 der Zellen vorzeitig entladen werden, so wird dann, wenn der Zusatzverbraucher 7 auf die Gruppe 1 geschaltet wird, der Kontakt 21 geöffnet und der Kontakt 13 geschlossen. Die Gruppe 1 der der Zellen wird dann unabhängigen von den übrigen Zellen über den Zusatzverbraucher 7 entladen, bis sie ihre betriebliche Einsatzgrenze erreicht hat. Dann wird der Zusatzverbraucher 7 durch Öffnen der Kontakte 71 abgetrennt und durch Schliessen des Kontaktes 14 die Gruppe 1 der Zellen weiter entladen (gegebenenfalls über nicht dargestellte Widerstände) bis ungleichmässig verteilte Abscheidungen an den Elektroden beseitigt sind. Dann wird die Gruppe 1 der Zellen wiedergeladen und in der beschriebenen Weise in den Verband eingefügt. Gleichzeitig mit dem Zuschalten der Gruppe 1 wird die Gruppe 2 aus dem Verband herausgeschaltet.

Mit dem erfindungsgemässen Verfahren ist es möglich, nach einer Ladezyklenzahl, die der Gruppenzahl entspricht, jede Gruppe einmal durch Vollentladung zu regenerieren. Wenn nicht in jedem Ladezyklus des Speichers eine Gruppe von Zellen regeneriert werden muss, ist es zweckmässig, den Speicher in möglichst kurzer Zeit zu regenerieren und dann eine längere Pause einzuhalten. Dadurch ist gewährleistet, dass alle Zellen des Speichers mit geringst möglichem Alterungsunterschied betrieben werden können. Um eine dauernde Versorgung der zusätzlichen Verbraucher sicherzustellen, können diese in der Zeit zwischen zwei Regenerievorgängen in wechselnder Folge jeweils auf eine andere Gruppe von Zellen geschaltet werden.

*Bezugszeichenliste*

| 1 - 5 | Gruppen von Zellen |
|---|---|
| 6 | Hauptverbraucher |
| 7 | Zusatzverbraucher |
| 8 | Steuereinrichtung |
| 9 | Wahlschalter |
| 11 | Schaltkontakte |
| 61 | Schalter |
| 62 | Ladeanschluss |
| 71 | Schaltkontakt |
| 72 | Ladeanschluss |
| 81 | Strommessglied |
| 82 | Strommessglied |
| 83 | Spannungsmessglied |
| 85 | Antrieb |
| 91 | Antrieb |

**Patentansprüche**

1. Anordnung zum Betrieb eines elektrochemischen Speichers, insbesondere Zink-Brom- oder Zink-Chlor-Speichers, bei dem die aktive Masse während des Entladevorganges in Lösung geht und während des Ladevorganges wieder auf der Elektrode abgeschieden wird und bei dem Gruppen von Zellen (1 bis 5) in Reihe auf einen Verbraucher (6) geschaltet sind und eine Einrichtung zum Abbau ungleichmässig verteilter Abscheidungen an den Elektroden durch vollständiges Entladen von Zellen über einen Widerstand und eine Vorrichtung zum Wiederladen der Zellen vorgesehen sind, dadurch gekennzeichnet, dass die Einrichtung zum Abbau ungleichmässig verteilter Abscheidungen mit einer Steuereinrichtung (8) in der Weise versehen ist, dass in zyklischer Folge jeweils nur eine Gruppe von Zellen (1) des Speichers über den Widerstand entladen und diese Gruppe spätestens dann aus dem Verband der übrigen Gruppen (2 bis 5) herausgeschaltet wird, wenn sie ihre betriebliche Einsatzgrenze erreicht hat, dass sie dann weiter soweit entladen wird, bis Abscheidungen an den Elektroden beseitigt sind und dass sie nach dem Aufladen wieder in den Speicher eingefügt oder in den Speicher eingefügt und dann geladen wird.

2. Anordnung nach Anspruch 1, dadurch gekennzeichnet, dass der an die vorzeitig zu entladende Gruppe der Zellen schaltbare Widerstand ein zusätzlicher Verbraucher (7) ist.

## Claims

1. An arrangement for operating an electrochemical energy storage device, in particular a zinc-bromine or zinc-chloride store, wherein the active mass is dissolved during the discharge process and re-deposited on the electrode during the charging process, and wherein groups of cells (1 to 5) are connected in series to a load (6), means for the disintegration of unevenly distributed deposits on the electrodes by completely discharging the cells via a resistor, and means for recharging the cells, characterised in that the means for disintegration of unevenly distributed deposits is provided with a control device (8) in such manner that only one group of cells (1) of the store is respectively discharged by means of the resistor in a cyclic sequence and said group is switched from the remaining groups (2 to 5) of the unit at the latest when is has reached its operational application limit, that it is subsequently further discharged until deposits on the electrodes are removed, and that following charging they are reinserted into the store or inserted into the store and discharged.

2. An arrangement as claimed in claim 1, characterised in that the resistor, which can be connected to the group of cells to be prematurely discharged, is an additional load (7).

## Revendications

1. Dispositif pour faire fonctionner un accumulateur électrochimique d'énergie électrique, notamment un tel accumulateur au zinc-brome ou au zinc-chlore, dans lequel la masse active passe en solution pendant le processus de décharge et se dépose à nouveau sur l'électrode pendant le processus de charge et dans lequel des groupes de cellules (1 à 5) sont branchés en série avec un appareil d'utilisation (6), et il est prévu un dispositif servant à détruire des dépôts répartis de façon irrégulière sur les électrodes, au moyen de décharges complètes de cellules par l'intermédiaire d'une résistance, et un dispositif pour recharger les cellules, caractérisé par le fait que le dispositif servant à supprimer des dépôts répartis de façon irrégulière est muni d'un dispositif de commande (8) de telle sorte que, selon une succession cyclique, respectivement seul un groupe de cellules (1) de l'accumulateur est déchargé par l'intermédiaire de la résistance et ce groupe est ensuite débranché de l'ensemble des autres groupes (2 à 5), au plus tard lorsqu'il a atteint sa limite d'utilisation en fonctionnement, qu'il continue alors à être déchargé jusqu'à ce que des dépôts présents sur les électrodes soient éliminés, et qu'il est à nouveau inséré dans l'accumulateur après avoir été chargé, ou est inséré dans l'accumulateur et est ensuite chargé.

2. Dispositif suivant la revendication 1, caractérisé par le fait que la résistance qui peut être raccordée au groupe des cellules devant être déchargé prématurément, est un apparareil d'utilisation (7) supplémentaire.